# EUROPÄISCHE PATENTSCHRIFT

(11) **EP 2 451 849 B1**
(45) Veröffentlichungstag und Bekanntmachung des Hinweises auf die Patenterteilung: **11.09.2013**
(21) Anmeldenummer: 10729921.6
(22) Anmeldetag: 09.07.2010
(51) Int. Cl.: C08F 20/18, C08F 2/44

(54) **MIKROKAPSELN MIT POLYVINYLMONOMEREN ALS VERNETZER**
MICROCAPSULES HAVING POLYVINYL MONOMERS AS CROSS-LINKING AGENTS
MICROCAPSULES COMPRENANT DES MONOMÈRES POLYVINYLE COMME AGENTS RÉTICULANTS

(30) Priorität: 10.07.2009 EP 09165134; 26.04.2010 US 327729 P; 26.04.2010 EP 10160998
(43) Veröffentlichungstag der Anmeldung: 16.05.2012
(73) Patentinhaber: BASF SE, 67056 Ludwigshafen (DE)
(72) Erfinder: JUNG, Marc Rudolf, 67551 Worms (DE); KOPLIN, Tobias Joachim, 67063 Ludwigshafen (DE); ALTMANN, Stephan, 67152 Ruppertsberg (DE); MORARU, Bogdan, 68199 Mannheim (DE); SCHMIDT, Marco, 67346 Speyer (DE); SCHRÖDER-GRIMONPONT, Tina, 76764 Rheinzabern (DE); WILLAX, Hans, 67133 Maxdorf (DE); KATZ, Britta, 67125 Dannstadt-Schauernheim (DE)
(86) Internationale Anmeldenummer: PCT/EP2010/059888
(87) Internationale Veröffentlichungsnummer: WO 2011/004006

(56) Entgegenhaltungen:
- WO-A2-2008/006762
- WO-A2-2008/071649

## Beschreibung

Die vorliegende Erfindung betrifft Mikrokapseln umfassend einen Kapselkern und eine Kapselwand aufgebaut aus C₁-C₂₄-Alkylestern der Acryl- und/oder Methacrylsäure, Polyvinylmonomeren sowie gegebenenfalls sonstigen Monomeren ohne ionisierbare Reste. Außerdem betrifft die vorliegende Erfindung ein Verfahren zu ihrer Herstellung, ihre Verwendung in Bindebaustoffen, Textilien und Wärmeträgerflüssigkeiten.

In den letzten Jahren hat es vielfältige Entwicklungen auf dem Gebiet der mikroverkapselten Latentwärmespeicher gegeben. Die Funktionsweise der Latentwärmespeicher, oftmals auch als PCM (phase change material) bezeichnet, beruht auf der beim fest/flüssig-Phasenübergang auftretenden Umwandlungsenthalpie, die eine Energieaufnahme oder Energieabgabe an die Umgebung bedeutet. Sie können damit zur Temperaturkonstanthaltung in einem festgelegten Temperaturbereich verwendet werden.

So lehren die EP-A-1 029 018 und die EP-A 1 321 182 die Verwendung von Mikrokapseln mit einer Kapselwand aus hochvernetzten Methacrylsäureesterpolymer und einem Latentwärmespeicherkern in Bindebaustoffen wie Beton oder Gips. Die DE-A-101 39 171 beschreibt die Verwendung von mikroverkapselten Latentwärmespeichermaterialien in Gipskartonplatten. Die Mikrokapselwände werden durch Polymerisation von Methylmethacrylat und Butandioldiacrylat in Gegenwart von anorganischen festen Teilchen als Schutzkolloid aufgebaut. Ferner lehrt die WO 2005/116559 den Einsatz von mikroverkapselten Latentwärmespeichermaterialien in Spanplatten zusammen mit Melaminformaldehydharzen als Bindemittel.

Vielfach werden als Latentwärmespeichermaterialien organische Wachse eingesetzt, die beim Überschreiten des Phasenüberganges schmelzen. Werden solche Mikrokapseln in porösen Baumaterialien wie Beton oder Gips eingesetzt, so kann bei Kapseln mit ungenügender Dichtigkeit über einen längeren Zeitraum ein geringer Austritt von Wachsen beobachtet werden. Derartige Ausdünstungen sind jedoch insbesondere in Innenräumen unerwünscht, so dass der vorliegenden Erfindung dichtere Kapseln als Aufgabe zugrunde liegen.

Die ältere Anmeldung PCT/EP 2009/050319 lehrt Kapselwände aus Methylmethacrylat, Dimethylaminoethylmethacrylat und einer Vernetzermischung mit Duftstoffen als Kernmaterial.

Mikrokapseln mit verbesserter Dichtigkeit werden beispielsweise in der WO 2008/071649 beschrieben, deren Wände mittels einer Vernetzermischung vernetzt wurden, die 20 bis 80 Gew.-% eines Polyvinylmonomers enthielt. Die Wände enthalten jedoch bis zu 70 Gew.-% bezogen auf die Gesamtmonomere Methacrylsäure einpolymerisiert. Diese Kapseln zeigen bei Teilchengrößen von 1,5 bis 2,5 µm im Textilbereich gute Dichtigkeiten in Hinblick auf Reinigungsbeständigkeit und gute Abdampfraten bei 180°C.

Es hat sich jedoch gezeigt, dass Mikrokapseln mit Kapselgrößen von 1 bis 50 µm, wie sie üblicherweise im Baubereich eingesetzt werden, verarbeitet in Gipsbauplatten eine unbefriedigende Dichtigkeit aufweisen. Es scheint somit nicht nur wichtig zu sein, bei den hohen Verarbeitungstemperaturen eine gute Dichtigkeit aufzuweisen, sondern eine zusätzliche Anforderung ist eine gute Abdampfrate bei Temperaturen, in denen die Wandbereiche der Kapseln noch keine erhöhte Beweglichkeit zeigen. Es wird angenommen, dass diese Temperatur im Bereich der Glasübergangstemperatur des Homopolymers des nichtvernetzenden Hauptmonomers liegt. Daher war eine Aufgabe der vorliegenden Erfindung, Mikrokapseln für Bauanwendungen mit guter Abdampfrate im Temperaturbereich von 15 bis 105°C zur Verfügung zu stellen. Eine weitere Aufgabe war es Baustoffe mit niedrigen Emissionswerten, bezogen auf hochsiedende Komponenten zu entwickeln.

Dem gemäß wurden Mikrokapseln gefunden, umfassend einen Kapselkern und eine Kapselwand, wobei die Kapselwand aufgebaut ist aus

| | |
|---|---|
| 50 bis 90 Gew.-% | eines oder mehrerer C₁-C₂₄-Alkylester der Acryl- und/oder Methacrylsäure (Monomere I), |
| 10 bis 50 Gew.-% | eines oder mehrerer Polyvinylmonomere (Monomere II), sowie |
| 0 bis 30 Gew.-% | eines oder mehrerer einfach ungesättigter, nicht ionisierbarer Monomere (Monomer III), die von den Monomeren I verschieden sind, |

jeweils bezogen auf das Gesamtgewicht der Monomere, ein Verfahren zu ihrer Herstellung sowie ihre Verwendung in Bindebaustoffen, Textilien und Wärmeträgerflüssigkeiten.

Die erfindungsgemäßen Mikrokapseln umfassen einen Kapselkern und eine Kapselwand. Der Kapselkern besteht überwiegend, zu mehr als 95 Gew.-%, aus lipophiler Substanz. Die mittlere Teilchengröße der Kapseln (Z-Mittel mittels Lichtstreuung) beträgt 1 bis 50 µm. Gemäß einer bevorzugten Ausführungsform beträgt die mittlere Teilchengröße der Kapseln 1,5 bis 15 µm, bevorzugt 4 bis 10 µm. Dabei haben bevorzugt 90% der Teilchen eine Teilchengröße von weniger als der doppelten mittleren Teilchengröße.

Das Gewichtsverhältnis von Kapselkern zu Kapselwand beträgt im allgemeinen von 50 : 50 bis 95 : 5. Bevorzugt wird ein Kern/Wand-Verhältnis von 70 : 30 bis 93 : 7.

Die Polymere der Kapselwand enthalten im Allgemeinen mindestens 50 Gew.-%, in bevorzugter Form mindestens 55 Gew.-% und in besonders bevorzugter Form mindestens 60 Gew.-% sowie im Allgemeinen höchstens 90 Gew.-%, vorzugsweise höchstens 80 Gew.-% und in besonders bevorzugter Form höchstens 75 Gew.-% C₁-C₂₄-Alkylester der Acryl- und/oder Methacrylsäure (Monomere I) einpolymerisiert, bezogen auf das Gesamtgewicht der Monomere.

Erfindungsgemäß enthalten die Polymere der Kapselwand im Allgemeinen mindestens 10 Gew.-%, bevorzugt mindestens 15 Gew.-%, vorzugsweise mindestens 20 Gew.-% sowie im Allgemeinen höchstens 50 Gew.-%, vorzugsweise höchstens 40 Gew.-% und in besonders bevorzugter Form höchstens 30 Gew.-% eines oder mehrerer Polyvinylmonomere (Monomere II) einpolymerisiert, bezogen auf das Gesamtgewicht der Monomere.

Gemäß einer weiteren bevorzugten Ausführungsform enthalten die Polymere der Kapselwand mindestens 20 Gew.-% bevorzugt mindestens 25 Gew.-%, vorzugsweise mindestens 30 Gew.-% sowie im Allgemeinen höchstens 50 Gew.-%, vorzugsweise höchstens 45 Gew.-% eines oder mehrerer Polyvinylmonomere (Monomere II) einpolymerisiert, bezogen auf das Gesamtgewicht der Monomere.

Daneben können die Polymere bis zu 30 Gew.-%, bevorzugt bis zu 20 Gew.-%, insbesondere bis zu 10 Gew.-%, besonders bevorzugt 1 bis 5 Gew.-% eines oder mehrerer einfach ungesättigter, nicht ionisierbarer Monomere (Monomer III), die von den Monomeren I verschieden sind, einpolymerisiert enthalten, bezogen auf das Gesamtgewicht der Monomere.

Bevorzugt werden Mikrokapseln, deren Kapselwand aufgebaut ist aus

| | |
|---|---|
| 60 bis 85 Gew.-% | eines oder mehrerer C₁-C₂₄-Alkylester der Acryl- und/oder Methacrylsäure (Monomere I), |
| 15 bis 40 Gew.-% | eines oder mehrerer Polyvinylmonomere (Monomere II), sowie |
| 0 bis 30 Gew.-% | eines oder mehrerer einfach ungesättigter, nicht ionisierbarer Monomere (Monomer III), die von den Monomeren I verschieden sind, |

jeweils bezogen auf das Gesamtgewicht der Monomere.

Weiterhin bevorzugt werden Mikrokapseln, deren Kapselwand aufgebaut ist aus

| | |
|---|---|
| 50 bis 70 Gew.-% | eines oder mehrerer C₁-C₂₄-Alkylester der Acryl- und/oder Methacrylsäure (Monomere I), |
| 30 bis 50 Gew.-% | eines oder mehrerer Polyvinylmonomere (Monomere II), sowie |
| 0 bis 30 Gew.-% | eines oder mehrerer einfach ungesättigter, nicht ionisierbarer Monomere (Monomer III), die von den Monomeren I verschieden sind, |

jeweils bezogen auf das Gesamtgewicht der Monomere.

Vorzugsweise ist die Kapselwand nur aus Monomeren der Gruppen I und II aufgebaut.

Als Monomere I eignen sich C₁-C₂₄-Alkylester der Acryl- und/oder Methacrylsäure. Bevorzugte Monomere I sind Methyl-, Ethyl-, n-Propyl- und n-Butylacrylat sowie die entsprechenden Methacrylate. Besonders bevorzugt sind iso-Propyl-, iso-Butyl-, sec.-Butyl- und tert.-Butylacrylat sowie iso-Propyl-, iso-Butyl-, sec.-Butyl- und tert.-Butylmethacrylat. Generell werden die Methacrylate bevorzugt.

Bevorzugte Polyvinylmonomere sind die Polyester von Polyolen mit Acrylsäure und/oder Methacrylsäure, ferner die Polyallyl- und Polyvinylether dieser Polyole. Bevorzugt werden Polyvinylmonomere mit drei und/oder vier radikalisch polymerisierbaren Doppelbindungen. Bevorzugt werden Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen. So liegt Pentaerythrittetraacrylat in der Regel in technischen Mischungen im Gemisch mit Pentaerythrittriacrylat und geringeren Mengen Oligomerisierungsprodukten vor.

Als Monomere III kommen einfach ungesättigte, nicht ionisierbare Monomere (Monomer III), die von den Monomeren I verschieden sind, wie Vinylacetat, Vinylpropionat, Vinylpyridin, Styrol oder α-Methylstyrol, in Betracht.

Die erfindungsgemäßen Mikrokapseln lassen sich durch eine sogenannte in-situ-Polymerisation herstellen. Das Prinzip der Mikrokapselbildung basiert darauf, dass man aus den Monomeren, Radikalstarter, Schutzkolloid und der einzukapselnden lipophilen Substanz eine Öl-in-Wasser-Emulsion herstellt, in der die Monomere, und die lipophile Substanz als disperse Phase vorliegen. Gemäß einer Ausführungsform ist es möglich, den Radikalstarter erst nach der Dispergierung zuzugeben. Anschließend löst man die Polymerisation der Monomere durch Erwärmung aus und steuert sie gegebenenfalls durch weitere Temperaturerhöhung, wobei die entstehenden Polymere die Kapselwand bilden, welche die lipophile Substanz umschließt. Dieses allgemeine Prinzip wird beispielsweise in der DE-A-10 139 171 beschrieben, auf deren Inhalt ausdrücklich Bezug genommen wird.

In der Regel werden die Mikrokapseln in Gegenwart wenigstens eines organischen und/oder anorganischen Schutzkolloids hergestellt. Sowohl organische wie auch anorganische Schutzkolloide können ionisch oder neutral sein kann. Schutzkolloide können dabei sowohl einzeln wie auch in Mischungen mehrerer gleich oder unterschiedlich geladener Schutzkolloide eingesetzt werden. Bevorzugt werden die Mikrokapseln in Gegenwart eines anorganischen Schutzkolloids insbesondere in Kombination mit einem organischen Schutzkolloid hergestellt.

Organische Schutzkolloide sind bevorzugt wasserlösliche Polymere, die die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen im Bereich von 0,5 bis 50 µm, vorzugsweise 0,5 bis 30 µm insbesondere 0,5 bis 10 µm, ausbilden.

Organische anionische Schutzkolloide sind Natriumalginat, Polymethacrylsäure und ihre Copolymerisate, die Copolymerisate des Sulfoethylacrylats und -methacrylats, Sulfopropylacrylats und -methacrylats, des N-(Sulfoethyl)-maleinimids, der 2-Acryl-amido-2-alkylsulfonsäuren, Styrolsulfonsäure sowie der Vinylsulfonsäure. Bevorzugte organisch anionische Schutzkolloide sind Naphthalinsulfonsäure und Naphthalinsulfonsäure-Formaldehyd-Kondensate sowie vor allem Polyacrylsäuren und Phenolsulfon-säure-Formaldehyd-Kondensate.

Organische neutrale Schutzkolloide sind beispielsweise Cellulosederivate wie Hydroxyethylcellulose, Methylhydroxyethylcellulose, Methylcellulose und Carboxymethylcel-lulose, Polyvinylpyrrolidon, Copolymere des Vinylpyrrolidons, Gelatine, Gummiarabicum, Xanthan, Kasein, Polyethylenglykole, Polyvinylalkohol und partiell hydrolysierte Polyvinylacetate sowie Methylhydroxypropylcellulose. Bevorzugte organische neutrale Schutzkolloide sind Polyvinylalkohol und partiell hydrolysierte Polyvinylacetate sowie Methylhydroxy(C₁-C₄)-alkylcellulose.

Gemäß der vorliegenden Erfindung wird vorzugsweise eine Kombination eines auf SiO₂-basierendem Schutzkolloids und einer Methylhydroxy-(C₁-C₄)-alkylcellulose eingesetzt. Es hat sich dabei gezeigt, dass die Kombination mit einer niedermolekularen Methylhydroxy-(C₁-C₄)-alkylcellulose zu vorteilhaften Eigenschaften führt. Erfindungsgemäß wird eine Methylhydroxy-(C₁-C₄)-alkylcellulose mit einem mittleren Molekulargewicht (Gewichtsmittel) ≤ 50 000 g/mol, bevorzugt aus dem Bereich von 5 000 bis 50 000 g/mol, vorzugsweise von 10 000 bis 35 000 g/mol, insbesondere 20 000 bis 30 000 g/mol eingesetzt.

Unter Methylhydroxy-(C₁-C₄)-alkylcellutose sind Methylhydroxy-(C₁-C₄)-alkylcellulose unterschiedlichster Methylierungsgrade wie auch Alkoxylierungsgrade zu verstehen. Methylhydroxy-(C₁-C₄)-alkylcellulosen werden in bekannter Weise durch zwei Reaktionsschritte hergestellt. In einem Schritt findet die Alkoxylierung von Cellulose mit Alkylenoxiden statt. Im zweiten Schritt findet die Methylierung vorhandener Hydroxylgruppen mit einem Methylhalogenid statt. Diese beiden Reaktionen finden in der Regel nacheinander statt, können jedoch auch gleichzeitig durchgeführt werden. Je nach Stöchiometrie der eingesetzten Alkylenoxide und Alkylierungsmittel zur Cellulose variiert der Grad der Substitution der Cellulose. Der durchschnittliche Substitutionsgrad (DS) gibt an, wie viele Hydroxyleinheiten an einer Dehydroglucose-Einheit durchschnittlich verethert wurden und kann von 0 bis 3 betragen. Der molare Substitutionsgrad (MS) gibt die mittlere Zahl von Alkoxy-Einheiten pro Dehydroglycoseeinheit an, und kann durch den Aufbau von Seitenketten während der Alkoxylierung auch größer als 3 werden.

Die bevorzugten Methylhydroxy-(C₁-C₄)-alkylcellulosen besitzen einen durchschnittliche Substitutionsgrad DS von 1,1 bis 2,5 und einen molaren Substitutionsgrad MS von 0,03 bis 0,9.

Geeignete Methylhydroxy-(C₁-C₄)-alkylcellulose sind beispielsweise Methylhydroxyethylcellulose oder Methylhydroxypropylcellulose. Besonders bevorzugt wird Methylhydroxypropylcellulose. Derartige Methylhydroxy-(C₁-C₄)-alkylcellulosen sind beispielsweise unter den Handelsnamen Culminal^{®} der Firma Hercules/Aqualon erhältlich.

Bevorzugt werden die Mikrokapsel hergestellt, indem man eine Öl-in-Wasser-Emulsion, umfassend als wesentliche Bestandteile die Monomere, Radikalstarter, anorganisches Schutzkolloid und die einzukapselnde lipophilen Substanz, herstellt und die Polymerisation auslöst. Gegebenenfalls steuert man die Polymerisation durch Temperaturerhöhung, wobei die entstehenden Polymere die Kapselwand bilden, welche die lipophile Substanz umschließt.

Bevorzugt handelt es sich beim anorganischen Schutzkolloid um anorganische feste Partikel sogenannte Pickering-Systeme. Ein solches Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern. Die Wirkweise und ihr Einsatz ist in der EP-A-1 029 018 sowie der EP-A-1 321 182 beschrieben, auf deren Inhalte ausdrücklich Bezug genommen wird.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind auf SiO₂-basierende Kieselsäuren, Magnesiumpyrophosphat und Tricalciumphosphat.

Geeignete auf SiO₂-basierende Schutzkolloide sind hochdisperse Kieselsäuren. Sie können als feine, feste Teilchen in Wasser dispergiert werden. Es ist aber auch mög-lich, sogenannte kolloidale Dispersionen von Kieselsäure in Wasser zu verwenden. Solch kolloidale Dispersionen sind alkalische, wässrige Mischungen von Kieselsäure. Im alkalischen pH-Bereich sind die Partikel gequollen und in Wasser stabil. Für eine Verwendung dieser Dispersionen als Schutzkolloid ist es vorteilhaft, wenn der pH-Wert der Öl-in-Wasser Emulsion mit einer Säure auf pH 2 bis 7 eingestellt wird. Bevorzugte kolloidale Dispersionen von Kieselsäure haben bei pH 9,3 eine spezifische Oberfläche im Bereich von 70 bis 90 m²/g.

Bevorzugt werden als SiO₂-basierende Schutzkolloide hochdisperse Kieselsäuren, deren mittleren Teilchengrößen im Bereich von 40 bis 150 nm bei pH-Werten im Bereich von 8 - 11 liegen. Beispielhaft seien Levasil^{®} 50/50 (H.C.Starck), Köstrosol^{®} 3550 (CWK Bad Köstritz), und Bindzil^{®} 50/80 (Akzo Nobel Chemicals) erwähnt.

Gemäß einer bevorzugten Ausführungsform wird eine Kombination eines auf SiO₂-basierendem Schutzkolloids und einer Methylhydroxy-(C₁-C₄)-alkylcellulose eingesetzt. Es hat sich dabei gezeigt, dass die Kombination mit einer niedermolekularen Methyl-hydroxy-(C₁-C₄)-alkylcellulose zu vorteilhaften Eigenschaften führt. Erfindungsgemäß wird eine Methylhydroxy-(C₁-C₄)-alkylcellulose mit einem mittleren Molekulargewicht (Gewichtsmittel) ≤ 50 000 g/mol, bevorzugt aus dem Bereich von 5 000 bis 50 000 g/mol, vorzugsweise von 10 000 bis 35 000 g/mol, insbesondere 20 000 bis 30 000 g/mol eingesetzt.

Im allgemeinen werden die Schutzkolloide in Mengen von 0,1 bis 20 Gew.-%, vorzugsweise 0,1 bis 15, vorzugsweise von 0,5 bis 10 Gew.-% eingesetzt, bezogen auf die Wasserphase.

Für anorganische Schutzkolloide werden dabei bevorzugt Mengen von 0,5 bis 15, vorzugsweise 5-15 Gew.-% bezogen auf die Wasserphase, gewählt.

Organische Schutzkolloide werden bevorzugt in Mengen von 0,1 bis 10 Gew.-% eingesetzt, bezogen auf die Wasserphase der Emulsion. Die gemäß einer bevorzugten Ausführungsform eingesetzte Methylhydroxy-(C₁-C₄)-alkylcellulose wird dabei bevorzugt in einer Menge von 0,5 Gew.-% bis 1,5 Gew.-%, insbesondere von 0,6 Gew.-% bis 0,8 Gew.-% bezogen auf das auf SiO₂-basierende Schutzkolloid eingesetzt.

Gemäß einer weiteren bevorzugten Ausführungsform wird das auf SiO₂-basierenden Schutzkolloids vorzugsweise in Kombination mit einer Menge von 0,2 Gew.-% bis 0,65 Gew.-%, insbesondere von 0,3 Gew.-% bis 0,6 Gew.-% Methylhydroxy-(C₁-C₄)-al-kylcellulose bezogen auf das auf SiO₂-basierende Schutzkolloid eingesetzt.

Als Radikalstarter für die radikalisch ablaufende Polymerisationsreaktion können die üblichen öllöslichen Peroxo- und Azoverbindungen, zweckmäßigerweise in Mengen von 0,2 bis 5 Gew.-%, bezogen auf das Gewicht der Monomere, eingesetzt werden. Unter öllöslich ist dabei zu verstehen, dass sich der Radikalstarter Bestandteil der Ölphase der Öl-in-Wasser-Emulsion ist und dort die Polymerisation auslöst.

Je nach Aggregatzustand des Radikalstarters und seinem Löslichkeitsverhalten kann er als solcher, bevorzugt jedoch als Lösung, Emulsion oder Suspension zugeführt werden, wodurch sich insbesondere kleine Stoffmengen Radikalstarter präziser dosieren lassen.

Als bevorzugte Radikalstarter sind tert.-Butylperoxoneodecanoat, tert.-Amylperoxypivalat, Dilauroylperoxid, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper-2-ethylhexanoat, Di-tert.-butylperoxid, 2,5-Dimethyl-2,5-di-(tert.-butylperoxy)hexan und Cumolhydroperoxid zu nennen.

Besonders bevorzugte Radikalstarter sind Di-(3,5,5-trimethylhexanoyl)-peroxid, 4,4'-Azobisisobutyronitril, tert.-Butylperpivalat, Dilauroylperoxid , tert.-Butylperoxoneodecanoat und Dimethyl-2,2-azobisisobutyrat. Diese weisen eine Halbwertzeit von 10 Stunden in einem Temperaturbereich von 30 bis 100°C auf.

Weiterhin ist es möglich zur Polymerisation dem Fachmann bekannte Regler in üblichen Mengen zuzusetzen wie tert-Dodecylmercaptan oder Ethylhexylthioglycolat.

In der Regel führt man die Polymerisation bei 20 bis 100°C, vorzugsweise bei 40 bis 95°C durch. Abhängig von der gewünschten lipophilen Substanz ist die Öl-in-Wasser-Emulsion bei einer Temperatur zu bilden, bei der das Kernmaterial flüssig/ölig ist. Entsprechend muss ein Radikalstarter gewählt werden, dessen Zerfallstemperatur oberhalb dieser Temperatur liegt und die Polymerisation ebenfalls 2 bis 50°C oberhalb dieser Temperatur durchgeführt werden, so dass man gegebenenfalls Radikalstarter wählt, deren Zerfallstemperatur oberhalb des Schmelzpunkts der lipophilen Substanz liegt.

Eine gängige Verfahrensvariante für lipophile Substanzen mit einem Schmelzpunkt bis etwa 60°C ist eine Reaktionstemperatur beginnend bei 60°C, die im Verlauf der Reaktion auf 85°C erhöht wird. Vorteilhafte Radikalstarter haben eine 10-Stunden Halbwertszeit im Bereich von 45 bis 65°C wie t-Butylperpivalat.

Nach einer weiteren Verfahrensvariante für lipophile Substanzen mit einem Schmelzpunkt oberhalb 60°C wählt man ein Temperaturprogramm, welches bei entsprechend höheren Reaktionstemperaturen startet. Für Anfangstemperaturen um die 85°C werden Radikalstarter mit einer 10-Stunden Halbwertszeit im Bereich von 70 bis 90°C bevorzugt wie t-Butylper-2-ethylhexanoat.

Zweckmäßigerweise wird die Polymerisation bei Normaldruck vorgenommen, jedoch kann man auch bei vermindertem oder leicht erhöhtem Druck z. B. bei einer Polymerisationstemperatur oberhalb 100°C, arbeiten, also etwa im Bereich von 0,5 bis 5 bar.

Die Reaktionszeiten der Polymerisation betragen normalerweise 1 bis 10 Stunden, meistens 2 bis 5 Stunden.

Im Anschluss an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomere und anderen flüchtigen organischen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 99/24525 beschrieben, vorteilhaft durch redoxinitiierte Polymerisation, wie in der DE-A 44 35 423, DE-A 44 19 518 und DE-A 44 35 422 beschrieben.

Um den Restmonomergehalt darüber hinaus zu senken, ist gemäß einer Ausführungsform die erneute Zugabe eines Radikalstarters erforderlich, was den Beginn der Nachpolymerisation definiert. Gemäß einer bevorzugten Ausführungsform löst man im Anschluss an die Kapselbildung eine Nachpolymerisation mit Salzen der Peroxodischwefelsäure als Radikalstarter aus.

Geeignete Salze sind insbesondere Ammonium-, Natrium- und Kaliumperoxodischwefelsäure.

Die Alkalisalze der Peroxodischwefelsäure sind wasserlöslich und starten die Nachpolymerisation in der bzw. aus der Wasserphase heraus. Die Salze der Peroxodischwefelsäure werden zweckmäßigerweise in Mengen von 0,2 bis 5 Gew.-%, bezogen auf das Gewicht der Monomere, eingesetzt. Dabei ist es möglich sie auf einmal oder über einen gewissen Zeitraum zuzudosieren.

Die Temperatur für die Nachpolymerisation beträgt üblicherweise 60 bis 100°C. Die Dauer der Nachpolymerisation beträgt in der Regel 0,5 bis 5 Stunden.

Gemäß dieser bevorzugten Ausführungsform mit einer Nachpolymerisation mit einem oder mehreren Salzen der Peroxodischwefelsäure als Radikalstarter gelangt man zu besonders geruchsarmen Mikrokapseln.

Wenn erforderlich, kann die Nachpolymerisation durch Zugabe von Reduktionsmitteln wie Natriumbisulfit auch noch bei tieferen Temperaturen durchgeführt werden. Die Zugabe von Reduktionsmitteln kann den Restmonomergehalt weiter verringern.

Gegenüber gängigen Nachpolymersiationsinitiatoren bestehend aus organischen, wasserlöslichen Peroxo- oder Azo-Verbindungen wie ter.-Butylhydroperoxid, deren Zerfall ggf. durch Zugabe eines Reduktionsmittels wie Ascorbinsäure beschleunigt werden kann, zeigen die Salze der Peroxodischwefelsäure im Endprodukt deutlich geringere Mengen an Geruchsträgern wie beispielsweise Aldehyden.

Man kann auf diese Weise Mikrokapseln mit einer mittleren Teilchengröße im Bereich von 0,5 bis 100 µm herstellen, wobei die Teilchengröße in an sich bekannter Weise über die Scherkraft, die Rührgeschwindigkeit, und seine Konzentration eingestellt werden kann. Bevorzugt werden Mikrokapseln mit einer mittleren Teilchengröße im Bereich von 0,5 bis 50 µm, bevorzugt 0,5 bis 30 µm, insbesondere 3 bis 10 µm insbesondere 3 bis 7 µm (Z-Mittel mittels Lichtstreuung).

Die erfindungsgemäßen Mikrokapseln sind je nach lipophiler Substanz für Durchschreibepapier, in der Kosmetik, zur Verkapselung von Klebstoffen, Klebstoffkomponenten, Duftstoffen, Katalysatoren oder im Pflanzenschutz bzw. allgemein zur Verkapselung von Bioziden, Wirk- und Effektstoffen geeignet. Besonders eignen sich die erfindungsgemäßen Mikrokapseln für Latentwärmespeichermaterialien.

Latentwärmespeichermaterialien sind definitionsgemäß Substanzen, die in dem Temperaturbereich, in welchem eine Wärmeübertragung vorgenommen werden soll, einen Phasenübergang aufweisen. Vorzugsweise weist die lipophile Substanz einen fest/flüssig Phasenübergang im Temperaturbereich von -20 bis 120°C auf.

Als geeignete Substanzen sind beispielhaft zu nennen:
- aliphatische Kohlenwasserstoffverbindungen wie gesättigte oder ungesättigte C₁₀-C₄₀-Kohlenwasserstoffe, die verzweigt oder bevorzugt linear sind, wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, den lipophilen Substanzen in ihnen lösliche Verbindungen zuzugeben, um so die zum Teil bei den unpolaren Substanzen auftretende Kristallisationsverzögerung zu verhindern. Vorteilhaft verwendet man, wie in der US-A 5 456 852 beschrieben, Verbindungen mit einem 20 bis 120 K höheren Schmelzpunkt als die eigentliche Kernsubstanz. Geeignete Verbindungen sind die oben als lipophile Substanzen erwähnten Fettsäuren, Fettalkohole, Fettamide sowie aliphatische Kohlenwasserstoffverbindungen. Sie werden in Mengen von 0,1 bis 10 Gew.-% bezogen auf den Kapselkern zugesetzt.

Je nach Temperaturbereich, in dem die Wärmespeicher gewünscht sind, werden die Latentwärmespeichermaterialien gewählt. Beispielsweise verwendet man für Wärmespeicher in Baustoffen in gemäßigtem Klima bevorzugt Latentwärmespeichermaterialien, deren fest/flüssig Phasenübergang im Temperaturbereich von 0 bis 60°C liegt. So wählt man in der Regel für Innenraumanwendungen Einzelstoffe oder Mischungen mit Umwandlungstemperaturen von 15 bis 30°C. Bei Solaranwendungen als Speichermedium oder zur Überhitzungsvermeidung von transparenter Wärmedämmung, wie in der EP-A-333 145 beschrieben, sind vor allem Umwandlungstemperaturen von 30-60°C geeignet. Für Anwendungen im Textilsektor sind vor allem Umwandlungstemperaturen von 0 bis 40 °C vorteilhaft, für Wärmeträgerflüssigkeiten von -10 bis 120°C.

Bevorzugte Latentwärmespeichermaterialien sind aliphatische Kohlenwasserstoffe besonders bevorzugt die oben beispielhaft aufgezählten. Insbesondere werden aliphatische Kohlenwasserstoffe mit 14 bis 20 Kohlenstoffatomen sowie deren Gemische bevorzugt.

Die erfindungsgemäßen Mikrokapseln lassen sich direkt als wässrige Mikrokapseldispersion oder in Form eines Pulvers verarbeiten. Die erfindungsgemäßen Mikrokapseln können gegebenenfalls anschließend durch Sprühtrocknung isoliert werden.

Die Sprühtrocknung der Mikrokapseldispersion kann in üblicher Weise erfolgen. Im Allgemeinen wird so vorgegangen, dass die Eingangstemperatur des Warmluftstroms im Bereich von 100 bis 200°C, vorzugsweise 120 bis 160°C, und die Ausgangstemperatur des Warmluftstroms im Bereich von 30 bis 90°C, vorzugsweise 60 bis 80°C liegt. Das Versprühen der wässrigen Polymerisatdispersion im Warmluftstrom kann beispielsweise mittels Ein- oder Mehrstoffdüsen oder über eine rotierende Scheibe erfolgen. Die Abscheidung des Polymerisatpulvers erfolgt normalerweise unter Verwendung von Zyklonen oder Filterabscheidern. Die versprühte wässrige Polymerisatdispersion und der Warmluftstrom werden vorzugsweise parallel geführt.

Gegebenenfalls setzt man zur Sprühtrocknung Sprühhilfsmittel zu, um die Sprühtrocknung zu erleichtern, oder bestimmte Pulvereigenschaften einzustellen, z.B. Staubarmut, Rieselfähigkeit oder verbesserte Redispergierbarkeit. Dem Fachmann sind eine Vielzahl von Sprühhilfsmitteln geläufig. Beispiele hierfür finden sich in DE-A 19629525, DE-A 19629526, DE-A 2214410, DE-A 2445813, EP-A 407889 oder EP-A 784449. Vorteilhafte Sprühhilfsmittel sind beispielsweise wasserlösliche Polymere vom Typ Polyvinylalkohol oder teilhydrolysierte Polyvinylacetate, Cellulosederivate wie Hydroxyethylcellulose, Carboxymethylcellulose, Methylcellulose, Methylhydroxyethylcellulose und Methylhydroxypropylcellulose, Stärke, Polyvinylpyrrolidon, Copolymere des Vinylpyrrolidons, Gelatine, bevorzugt Polyvinylalkohol und partiell hydrolysierte Polyvinylacetate sowie Methylhydroxypropylcellulose. Vorzugsweise arbeitet man ohne Zusatz von Sprühhilfsmitteln.

Die Anwendung des erfindungsgemäßen Mikrokapselpulvers ist vielfältig. Ein breites Anwendungsfeld sind Bindebaustoffe mit mineralischen, silikatischen oder polymeren Bindemitteln. Man unterscheidet dabei zwischen Formkörpern und Beschichtungsmassen. So zeichnen sie sich durch ihre Hydrolysestabilität gegenüber den wässrigen und oft alkalisch wässrigen Materialien aus.

Unter einem mineralischen Formkörper wird ein Formkörper verstanden, der aus einem Gemisch aus einem mineralischen Bindemittel, Wasser, Zuschlägen sowie gegebenenfalls Hilfsmitteln nach Formgebung dadurch entsteht, dass das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton, Lehm und/oder Zement bzw. Magnesiazement, die durch Anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigen.

Die Zuschläge bestehen in der Regel aus körnigem oder faserförmigem natürlichem oder künstlichem Gestein (Kies, Sand, Glas- oder Mineralfasern), in Sonderfällen auch aus Metallen oder organischen Zuschlägen oder aus Gemischen der genannten Zuschläge, mit Korngrößen oder Faserlängen, die dem jeweiligen Verwendungszweck in an sich bekannter Weise angepasst sind. Häufig werden zum Zweck der Farbgebung auch Buntpigmente als Zuschläge mit verwendet.

Als Hilfsmittel kommen insbesondere solche Substanzen in Betracht, die das Erhärten beschleunigen oder verzögern oder die die Elastizität oder Porosität des verfestigten mineralischen Formkörpers beeinflussen. Hierbei handelt es sich insbesondere um Polymerisate, wie sie z. B. aus der US-A 4,340,510, der GB-PS 1 505 558, der US-A 3,196,122, der US-A 3,043,790, der US-A 3,239,479, der DE-A 43 17 035, der DE-A 43 17 036, der JP-A 91/131 533 und anderen Schriften bekannt sind.

Die erfindungsgemäßen Mikrokapseln eignen sich zur Modifikation von mineralischen Bindebaustoffen (mörtelartige Zubereitungen), die ein mineralisches Bindemittel enthalten, das aus 70 bis 100 Gew.-% Zement und 0 bis 30 Gew.-% Gips besteht. Dies gilt insbesondere dann, wenn Zement das alleinige mineralische Bindemittel ist. Die erfindungsgemäße Wirkung ist dabei von der Zementart im Wesentlichen unabhängig. Je nach Vorhaben können also Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist. Bezüglich weiterer Details sei auf die DE-A 196 23 413 verwiesen. In typischer Weise enthalten die Trockenzusammensetzungen mineralischer Bindebaustoffe, bezogen auf die Menge an mineralischem Bindemittel, 0,1 bis 50 Gew.-%, bevorzugt 5 bis 40 Gew.-%, besonders bevorzugt 10 bis 30 Gew.-% Mikrokapseln. Bevorzugt werden die erfindungsgemäßen Mikrokapseln als Zusatz in mineralischen Beschichtungsmassen wie Putz angewendet. Ein solcher Putz für den Innenbereich setzt sich üblicherweise aus Gips als Bindemittel zusammen. In der Regel beträgt das Gewichtsverhältnis Gips/Mikrokapsel von 95 : 5 bis 70 : 30. Höhere Mikrokapselanteile sind natürlich möglich.

Beschichtungen für den Außenbereich wie Außenfassaden oder Feuchträume können Zement (zementöse Putze), Kalk oder Wasserglas (mineralische oder Silikat-Putze) oder Kunststoffdispersionen (Kunstharzputze) als Bindemittel zusammen mit Füllstoffen und gegebenenfalls Pigmenten zur Farbgebung enthalten. Der Anteil der Mikrokapseln am Gesamtfeststoff entspricht den Gewichtsverhältnissen für Gipsputze.

Ferner eignen sich die erfindungsgemäßen Mikrokapseln als Zusatz in polymeren Formkörpern oder polymeren Beschichtungsmassen. Hierunter sind thermoplastische und duroplastische Kunststoffe zu verstehen, bei deren Verarbeitung die Mikrokapseln nicht zerstört werden. Beispiele sind Epoxy-, Harnstoff-, Melamin-, Polyurethan und Silikonharze und auch Lacke sowohl auf Lösungsmittelbasis, High-Solid-Basis, Pulverlack oder Wasserbasislack und Dispersionsfilme. Geeignet ist das Mikrokapselpulver auch zur Einarbeitung in Kunststoffschäume und Fasern. Beispiele für Schäume sind Polyurethanschaum, Polystyrolschaum, Latexschaum und Melaminharzschaum.

Ferner eignen sich die erfindungsgemäßen Mikrokapseln als Zusatz in lignocellulosehaltigen Formkörpern, wie Spanplatten, MDF- und HDF-Platten, Korkplatten oder OSB-Platten wie in der WO2005/116559 beschrieben, auf die ausdrücklich Bezug genommen wird.

Vorteilhafte Effekte können ferner erzielt werden, wenn die erfindungsgemäßen Mikrokapseln in mineralischen Formkörpern verarbeitet werden, die geschäumt werden.

Eine besonders bevorzugte Ausführungsform für die Einarbeitung der Mikrokapseln in mineralischen Bindestoffen ist die Modifizierung von Gipsbauplatten oder Magnesiaplatten. Bauplatten enthaltend die erfindungsgemäßen Mikrokapseln sind ebenfalls Bestandteil der vorliegenden Erfindungen.

Dabei werden bevorzugt 5 bis 40 Gew.-%, insbesondere 20 bis 35 Gew.-%, Mikrokapselpulver bezogen auf das Gesamtgewicht der Bauplatte insbesondere Gipsbauplatte (Trockensubstanz) eingearbeitet. Die Herstellung von Gipsbauplatten mit mikroverkapselten Latentwärmespeichermaterialien ist allgemein bekannt und in der EP-A 1 421 243 beschrieben auf die ausdrücklich Bezug genommen wird. Sie werden üblicherweise in der Art hergestellt, dass wässriger Gipsbrei diskontinuierlich oder bevorzugt kontinuierlich zwischen zwei Deckschichten, wie Kartonblättern auf Cellulosebasis oder Glasfaservlies, gebracht wird, wobei Platten geformt werden. Der Gipsbrei wird durch kontinuierliche Zugabe und ständigem Mischen von β-Hemihydratcalciumsulfat in Wasser mit Additiven hergestellt. Die Mikrokapseln können sowohl zusammen mit dem Calciumsulfat dosiert werden, wie auch bereits als wässrige Dispersion vorliegen. Der so erhaltene Gipsbrei wird auf die Deckschicht aufgetragen, beispielsweise gesprüht und mit der zweiten Deckschicht abgedeckt. Während der beginnenden Aushärtung werden die Bauplatten in einer Presse zu Streifen geformt. Diese Streifen härten innerhalb weniger Minuten aus und werden in Platten geschnitten. In diesem Stadium enthalten die Platten in der Regel noch ein drittel ihres Gewichtes als freies Wasser. Um das Restwasser zu entfernen werden die Platten einer Wärmebehandlung bei Temperaturen bis zu 250°C unterworfen. Die so erhaltenen Gipsbauplatten haben eine Dichte von 750-950 kg/m³. Dabei können anstelle des üblicherweise eingesetzten Karton auf Cellulosebasis auch alternative, faserartige Gebilde als beidseitige Abdeckungen für die "Gipsbauplatte" verwendet werden. Alternative Materialien sind Polymerfasern aus z. B. Polypropylen, Polyester, Polyamid, Polyacrylaten, Polyacrylnitril und dergleichen. Auch Glasfasern sind geeignet. Die alternativen Materialien können als Gewebe und als sogenannte "nonwovens", also als vliesartige Gebilde, beispielsweise Glasfaservlies eingesetzt werden. Derartige Bauplatten sind beispielsweise aus der US 4,810,569, US 4,195,110 und US 4,394,411 bekannt. Bevorzugt werden Gipsbauplatten mit einer beidseitigen Abdeckung aus Glasfaservlies enthaltend die erfindungsgemäßen Mikrokapseln. Weitere alternative Abdeckungsmaterialien sind Aluminiumkaschierte Kartons, Folien und Papiere, Kunststofffolien kaschierte Papiere und dergleichen. Diese können ein- oder beidseitig verwendet werden. Es ist möglich, weitere solche Deckschichten auch nachträglich auf eine zuerst aufgebrachte Deckschicht zu laminieren. Dabei können beispielsweise Leimungs-/Klebe- und Schweißverfahren genutzt werden.

Die erfindungsgemäßen Mikrokapseln zeigen eingearbeitet in die Gipsbauplatte auch über einen längeren Zeitraum gute Dichtigkeiten auch bei niedrigeren Temperaturen. Außerdem zeigen elektronenmikroskopische Aufnahmen im mechanisch und thermisch besonders beanspruchten Randbereich von Gipsbauplatten geringere Zerstörung der Kapseln als die gemäß der DE-A-101 39 171 verwendeten Mikrokapseln. Weiterhin sind die neuen Gipsbauplatten geruchsarm und zeichnen sich durch niedrige Emissionswerte für mittel- und schwerflüchtige Verbindungen, SVOC (semi volatile organic compound) und TVOC (total volatile organic compound) aus.

Weiterhin eignen sich die erfindungsgemäßen Mikrokapseln vorteilhaft zur Modifizierung von Fasern und Textilerzeugnissen beispielsweise von Textilgeweben und Nonwovens (z.B. Vliesstoffe) usw.. Als Applikationsformen sind hierbei insbesondere Mikrokapselbeschichtungen, Schäume mit Mikrokapseln und mikrokapselmodifizierte Textilfasern zu nennen. Für Beschichtungen werden die Mikrokapseln zusammen mit einem polymeren Bindemittel und gegebenenfalls anderen Hilfsstoffen, in der Regel als Dispersion, auf ein Textilerzeugnis aufgebracht. Übliche Textilbindemittel sind filmformende Polymere mit einer Glasübergangstemperatur im Bereich von -45 bis 45°C vorzugsweise -30 bis 12°C. Die Herstellung solcher Mikrokapselbeschichtungen wird beispielsweise in der WO 95/34609 beschrieben, auf die ausdrücklich Bezug genommen wird. Die Modifizierung von Schäumen mit Mikrokapseln erfolgt in ähnlicher Weise, wie in der DE 981576T und der US 5,955,188 beschrieben. Das vorgeschäumte Substrat, vorzugsweise ein Polyurethan oder Polyether, wird mit einer bindemittelhaltigen Mikrokapseldispersion oberflächenbehandelt. Anschließend gelangt die Bindemittel-Mikrokapsel-Mischung durch Anlegen von Vakuum in die offenporige Schaumstruktur, in der das Bindemittel aushärtet und die Mikrokapseln an das Substrat bindet. Eine weitere Verarbeitungsmöglichkeit ist die Modifizierung der Textilfasern selbst, z.B. durch Verspinnen aus einer Schmelze oder einer wässrigen Dispersion wie in der US 2002/0054964 beschrieben. Schmelzspinnverfahren werden dabei für Nylon-, Polyester-, Polypropylenfasern und ähnliche Fasern eingesetzt während das Nassspinnverfahren vor allem zur Herstellung von Acrylfasern dient.

Ferner eignen sich die erfindungsgemäßen Mikrokapseln zur Herstellung von Wärmeträgerflüssigkeit. Unter dem Begriff Wärmeträgerflüssigkeit sind im Rahmen dieser Anmeldung sowohl Flüssigkeiten für den Wärmetransport als auch Flüssigkeiten für den Kältetransport, also Kühlflüssigkeiten, gemeint. Das Prinzip der Übertragung von Wärmeenergie ist in beiden Fällen gleich und unterscheidet sich lediglich in der Übertragungsrichtung.

Die nachfolgenden Beispiele sollen die Erfindung näher erläutern. Bei den Prozentangaben in den Beispielen handelt es sich um Gewichtsprozent sofern nicht anders angegeben.

Die Teilchengröße der Mikrokapseldispersion wurde mit einem Malvern Particle Sizer Typ 3600E bzw. einem Malvern Mastersizer 2000 gemäß einer Standardmessmethode bestimmt, die in der Literatur dokumentiert ist. Der D[v, 0,1] Wert besagt, dass 10 % der Teilchen eine Teilchengröße (nach dem Volumenmittel) bis zu diesem Wert haben. Entsprechend bedeutet D[v, 0,5], dass 50 % der Teilchen und D[v, 0,9], dass 90 % der Teilchen eine Teilchengröße (nach dem Volumenmittel) kleiner/gleich diesem Wert haben. Der Span-Wert ergibt sich aus dem Quotienten aus der Differenz D[v, 0,9] - D[v, 0,1]) und D[v, 0,5].

### Bestimmung der Abdampfrate bei 180°C (ADR)

Zur Vorbehandlung wurden 2 g der Mikrokapseldispersion in einem Metallschälchen zwei Stunden lang bei 105°C getrocknet, um etwaiges Restwasser zu entfernen. Dann wurde das Gewicht (mₒ) ermittelt. Nach einstündigem Erhitzen auf 180°C wurde nach Abkühlen das Gewicht (m₁) ermittelt. Die Gewichtsdifferenz (m₀ - m₁) bezogen auf m₀ und multipliziert mit 100 gibt die Abdampfrate in % an. Je kleiner der Wert, desto dichter sind die Mikrokapseln. Dabei ist zu beachten, dass Vergleiche in der Abdampfrate immer bei vergleichbaren Kapselgrößen und Stabilisatorsystemen durchgeführt werden sollten.

### Bestimmung der Abdampfrate (ADR) bei 95°C

Zur Vorbehandlung wurden 2 g der Mikrokapseldispersion in einem Metallschälchen zwei Stunden lang bei 105°C getrocknet, um etwaiges Restwasser zu entfernen. Dann wurde das Gewicht (mₒ) ermittelt. Nach 24-stündigem Erhitzen auf 95°C wurde nach Abkühlen das Gewicht (m₁) ermittelt. Die Gewichtsdifferenz (m₀ - m₁) bezogen auf mo und multipliziert mit 100 gibt die Abdampfrate in % an. Je kleiner der Wert, desto dichter sind die Mikrokapseln. Dabei ist zu beachten, dass Vergleiche in der Abdampfrate immer bei vergleichbaren Kapselgrößen und Stabilisatorsystemen durchgeführt werden sollten.

### Bestimmung der TVOC/SVOC-Werte anhand "Field and Laboratory Emission Cell"-Messung (FLEC-Messung)

Die Emission von VOC (flüchtigen organischen Verbindungen) aus Gipsplatten wird nach definierter Lagerung mit Hilfe einer FLEC-Messung erfasst und durch ein GC/MS-System qualitativ und quantitativ, gemäß DIN ISO 16000-6, DIN ISO16000-10 und DIN ISO 16017-1 bestimmt. Beim Messablauf wird die Gipsplatte in einem Metallrahmen (Innenmaße: 10,5 x 14,0 x 1,5 cm) inkl. Bodenplatte zunächst für 24 Stunden bei 30 °C in einem Trockenschrank (Heraeus T 5042 EK) konditioniert. Anschließend wird die Platte mit Rahmen und Bodenplatte in einen Trockenschrank mit Gasprobennehmer (Desaga GS 312) und Temperatur-Messeinheit gelegt und über einen FLEC-Aufsatz mit auf dem Rahmen aufliegender Dichtung werden laminar 10 L vorgereinigte Luft über die Platte strömen gelassen. Die Abluft wird über ein mit Tenax TA befülltes Adsorbtionsröhrchen geleitet. Die aus der Platte emittierten VOC werden anschließend aus dem Tenaxröhrchen thermisch desorbiert (Thermodesorber: Turbomatrix ATD von Perkin Elmer mit GC 6890 und MS 5973 von Agilent oder Thermodesorber TD20 mit GC/MS-QP 2010 S von Shimadzu) und am Gaschromatographen, wie dem Fachmann bekannt analysiert.

### Herstellung der Gipsplatte für die FLEC-Messung

217,0 g Stuckgips, 0,34 g Beschleuniger und 1,7 g Stärke wurden gemischt und in ca. 15 Sekunden auf die Oberfläche einer wässerigen Phase aus 109,4 g Wasser, 203,0 g Mikrokapseldispersion des jeweiligen Beispiels (Feststoffgehalt - 42 Gew.-%), 1,7 g Verflüssiger und 0,2 g Tego Foamex 1488 aufgestreut. Danach wurde mit einem Schneebesen weitere 30 Sekunden gemischt, so dass die Gipsbreimischung in insgesamt 45 Sekunden hergestellt wurde. Der Gipsbrei wurde in einen Metallrahmen (Innenmaß10,5 x 14) (ein Glasvlies wurde vorher auf den Boden des Metallrahmens gelegt) gegossen, glattgestrichen, ein Glasvlies auf die Oberfläche aufgebracht, und mit einem Nudelholz angedrückt. Nach 30 Minuten bei Raumtemperatur wurde die Platte in einen Abluftschrank 30 Minuten bei 170°C und eine Stunde bei 105°C getrocknet. Danach wurde die Platte ca. 15 Stunden bei 40°C nachgetrocknet.

### Herstellung der Mikrokapseldispersion

### Beispiel 1

### Wasserphase:

| | |
|---|---|
| 680 g | Wasser |
| 110 g | eines 50 gew.-%igen Silica-Sols (spez. Oberfläche ca. 80 m²/g) |
| 8 g | einer 5 gew.-%igen wässrigen Lösung von Methylhydroxypropylcellulose mit einem mittleren Molekulargewicht von 26000 g/mol |
| 2,1 g | einer 2,5 gew.-%igen wässrigen Natriumnitrit-Lösung |
| 4,0 g | einer 20 gew.%-igen Salpetersäure-Lösung in Wasser |

### Ölphase

| | |
|---|---|
| 308,0 g | eines Gemischs im Wesentlichen linearer Paraffine mit einem Schmelzpunkt von ca. 26°C |
| 123,2 g | Hexadecan (techn.) |
| 8,8 g | eines technischen Paraffins mit einem Schmelzpunkt von ca. 65°C |
| 66,0 g | Methylmethacrylat |
| 44,0 g | Pentaerythrit-Tetraacrylat (technisch, Fa. Cytec) |

### Zugabe 1

| | |
|---|---|
| 0,92 g | einer 75% igen Lösung von t-Butylperpivalat in aliphat. Kohlenwasserstoffen |

### Zulauf 1:

| | |
|---|---|
| 22,0 g | einer 5 gew.-%igen wässrigen Na-Peroxodisulfatlösung |
| 30,0 g | Wasser |

Die Wasserphase wurde bei 40°C vorgelegt, in diese wurde die aufgeschmolzene und homogen gemischte Ölphase gegeben und für 40 Minuten mit einem schnelllaufenden Dissolverrührer (Scheiben-Durchmesser 5 cm) bei 3500 Upm dispergiert. Zugabe 1 wurde zugegeben. Die Emulsion wurde unter Rühren mit einem Ankerrüher in 60 Minuten auf 70°C, innerhalb von weiteren 60 Minuten auf 90 °C aufgeheizt und für 60 Minuten bei 90 °C gehalten. Zu der entstandenen Mikrokapseldispersion wurde unter Rühren Zulauf 1 über 90 Minuten bei 90°C dosiert und anschließend für 2 Stunden, bei dieser Temperatur gerührt. Dann wurde auf Raumtemperatur abgekühlt und mit wässriger Natronlauge neutralisiert.

Es wurde eine Mikrokapseldispersion mit einer mittleren Teilchengröße von 7,2 µm und einem Feststoffgehalt von 43,6 % erhalten.

Die Abdampfrate bei 180°C (1h) betrug 11,5%.

Die Abdampfrate bei 95°C (24h) betrug 0,2%.

Durch Zugabe von Verdickern nach Abkühlen auf Raumtemperatur kann in an sich bekannter Weise ein Aufrahmen verhindert werden.

### Beispiel 2

Es wurde analog zu Beispiel 1 vorgegangen, jedoch bestand die Ölphase aus folgenden Komponenten:

### Ölphase

| | |
|---|---|
| 308,0 g | eines Gemischs im Wesentlichen linearer Paraffine mit einem Schmelzpunkt von ca. 26°C |
| 123,2 g | Hexadecan (techn.) |
| 8,8 g | eines technischen Paraffins mit einem Schmelzpunkt von ca. 65°C |
| 99,0 g | Methylmethacrylat |
| 11,0 g | Pentaerythrit-Tetraacrylat (technisch, Fa. Cytec) |

Es wurde eine Mikrokapseldispersion mit einer mittleren Teilchengröße von 5,7 µm und einem Feststoffgehalt von 43,2 % erhalten.

Die Abdampfrate bei 180°C (1 h) betrug 45,8 %

Die Abdampfrate bei 95°C (24h) betrug 0,3 %.

### Beispiel 3

Es wurde analog zu Beispiel 1 vorgegangen, jedoch bestand die Ölphase aus folgenden Komponenten:

### Ölphase

| | |
|---|---|
| 321,2 g | eines Gemischs im Wesentlichen linearer Paraffine mit einem Schmelzpunkt von ca. 26°C |
| 110,0 g | Hexadecan (techn.) |
| 9 g | eines technischen Paraffins mit einem Schmelzpunkt von ca. 65°C |
| 82,5 g | Methylmethacrylat |
| 27,5 g | Pentaerythrit-Tetraacrylat (technisch, Fa. Cytec) |

Es wurde eine Mikrokapseldispersion mit einer mittleren Teilchengröße von 7,0 µm und einem Feststoffgehalt von 43,3% erhalten.

Die Abdampfrate bei 180°C (1h) betrug 16,5%.

Die Abdampfrate bei 95°C (24h) betrug 0,7%.

### Vergleichsbeispiel 4, nicht erfindungsgemäß

Es wurde analog zu Beispiel 1 vorgegangen, jedoch bestand die Ölphase aus folgenden Komponenten:

### Ölphase

| | |
|---|---|
| 321,2 g | eines Gemischs im Wesentlichen linearer Paraffine mit einem Schmelzpunkt von ca. 26°C |
| 110,0 g | Hexadecan (techn.) |
| 9 g | eines technischen Paraffins mit einem Schmelzpunkt von ca. 65°C |
| 82,5 g | Methylmethacrylat |
| 27,5 g | Butandioldiacrylat |

Es wurde eine Mikrokapseldispersion mit einer mittleren Teilchengröße von 6,5 µm und einem Feststoffgehalt von 42,5% erhalten.

Die Abdampfrate bei 180 °C (1h) betrug > 60%.

Die Abdampfrate bei 95°C (24h) betrug 1,5 %.

SVOC aus Gipsplatte: 270 µg/m³

### Beispiel 5

Es wurde analog zu Beispiel 3 vorgegangen, jedoch wurde zur Mikrokapseldispersion nach dem Abkühlen auf Raumtemperatur 33,44 g einer 50 %igen wässrigen Lösung von Stärke 019S1 und 27,63 g einer 26 %igen wässrigen Lösung von Densodrin BA zugegeben. Anschließend wurde die Dispersion pH-neutral gestellt und mit 0,6 % Viscalex HV 30 vermischt.

Es wurde eine Mikrokapseldispersion mit einer mittleren Teilchengröße von 7,2 µm und einem Feststoffgehalt von 42,7 % erhalten.

Die Abdampfrate bei 180°C (1 h) betrug 15,1 %.

SVOC aus Gipsplatte: 710 µg/m³

### Beispiel 6

Es wurde analog zu Beispiel 1 vorgegangen, jedoch hatten Wasserphase und Ölphase die folgenden Zusammensetzungen:

### Wasserphase:

| | |
|---|---|
| 680 g | Wasser |
| 165 g | eines 50 gew.-%igen Silica-Sols (spez. Oberfläche ca. 80 m²/g) |
| 8 g | einer 5 gew.-%igen wässrigen Lösung von Methylhydroxypropylcellulose mit einem mittleren Molekulargewicht von 26000 g/mol |
| 2,1 g | einer 2,5 gew.-%igen wässrigen Natriumnitrit-Lösung |
| 4,0 g | einer 20 gew.%-igen Salpetersäure-Lösung in Wasser |

### Ölphase

| | |
|---|---|
| 321,0 g | eines Gemischs im Wesentlichen linearer Paraffine mit einem Schmelzpunkt von ca. 26°C |
| 110,0 g | Hexadecan (techn.) |
| 8,8 g | eines technischen Paraffins mit einem Schmelzpunkt von ca. 65°C |
| 66,0 g | Methylmethacrylat |
| 44,0 g | Pentaerythrit-Tetraacrylat (technisch, Fa. Cytec) |

Als Zugabe 1 wurde 1,5 g einer 75 Gew.-%igen Lösung von t-Butylpervialat in aliphat. Kohlenwasserstoffen zugegeben. Nach dem Abkühlen wurde die Mikrokapseldispersion zunächst neutralisiert und anschließend mit 1 Gew.-% Sokalan AT 120 vermischt. Es wurde eine Mikrokapseldispersion mit einer mittleren Teilchengröße von 5,0 µm und einem Feststoffgehalt von 43,4 % erhalten.

Die Abdampfrate bei 180°C (1 h) betrug 47,1 %.

SVOC aus Gipsplatte: 60 µg/m³

### Beispiel 7

Es wurde analog zu Beispiel 1 vorgegangen, jedoch hatten Wasserphase und Ölphase die folgenden Zusammensetzungen:

### Wasserphase:

| | |
|---|---|
| 680 g | Wasser |
| 121 g | eines 50 gew.-%igen Silica-Sols (spez. Oberfläche ca. 80 m²/g) |
| 8 g | einer 5 gew.-%igen wässrigen Lösung von Methylhydroxypropylcellulose mit einem mittleren Molekulargewicht von 26000 g/mol |
| 2,1 g | einer 2,5 gew.-%igen wässrigen Natriumnitrit-Lösung |
| 4,0 g | einer 20 gew.%-igen Salpetersäure-Lösung in Wasser |

### Ölphase

| | |
|---|---|
| 337,3 g | eines Gemischs im Wesentlichen linearer Paraffine mit einem Schmelzpunkt von ca. 26°C |
| 115,5 g | Hexadecan (techn.) |
| 9,24 g | eines technischen Paraffins mit einem Schmelzpunkt von ca. 65°C |
| 52,8 g | Methylmethacrylat |
| 35,2 g | Pentaerythrit-Tetraacrylat (technisch, Fa. Cytec) |

Es wurde eine Mikrokapseldispersion mit einer mittleren Teilchengröße von 6,2 µm und einem Feststoffgehalt von 44,3% erhalten.

Die Abdampfrate bei 180 °C (1 h) betrug >60%.

SVOC aus Gipsplatte: 440 µg/m³

### Beispiel 8

Es wurde analog zu Beispiel 1 vorgegangen, jedoch hatten Wasserphase und Ölphase die folgenden Zusammensetzungen:

### Wasserphase:

| | |
|---|---|
| 680 g | Wasser |
| 137,5 g | eines 50 gew.-%igen Silica-Sols (spez. Oberfläche ca. 80 m²/g) |
| 8 g | einer 5 gew.-%igen wässrigen Lösung von Methylhydroxypropylcellulose mit einem mittleren Molekulargewicht von 26000 g/mol |
| 2,1 g | einer 2,5 gew.-%igen wässrigen Natriumnitrit-Lösung |
| 3,8 g | einer 20 gew.%-igen Salpetersäure-Lösung in Wasser |

### Ölphase

| | |
|---|---|
| 321,0 g | eines Gemischs im Wesentlichen linearer Paraffine mit einem Schmelzpunkt von ca. 26°C |
| 110,0 g | Hexadecan (techn.) |
| 8,8 g | eines technischen Paraffins mit einem Schmelzpunkt von ca. 65°C |
| 66,0 g | Methylmethacrylat |
| 44,0 g | Pentaerythrit-Tetraacrylat (technisch, Fa. Cytec) |

Es wurde eine Mikrokapseldispersion mit einer mittleren Teilchengröße von 5,2 µm und einem Feststoffgehalt von 43,2% erhalten.

Die Abdampfrate bei 180°C (1 h) betrug 60,3%.

SVOC aus Gipsplatte: 180 µg/m³

### Beispiel 9

Es wurde analog zu Beispiel 1 vorgegangen, jedoch hatten Wasserphase und Ölphase die folgenden Zusammensetzungen:

### Wasserphase:

| | |
|---|---|
| 680 g | Wasser |
| 192,5 g | eines 50 gew.-%igen Silica-Sols (spez. Oberfläche ca. 80 m²/g) |
| 8 g | einer 5 gew.-%igen wässrigen Lösung von Methylhydroxypropylcellulose mit einem mittleren Molekulargewicht von 26000 g/mol |
| 2,1 g | einer 2,5 gew.-%igen wässrigen Natriumnitrit-Lösung |
| 4,5 g | einer 20 gew.%-igen Salpetersäure-Lösung in Wasser |

### Ölphase

| | |
|---|---|
| 321,0 g | eines Gemischs im Wesentlichen linearer Paraffine mit einem Schmelzpunkt von ca. 26°C |
| 110,0 g | Hexadecan (techn.) |
| 8,8 g | eines technischen Paraffins mit einem Schmelzpunkt von ca. 65°C |
| 82,5 g | Methylmethacrylat |
| 27,5 g | Pentaerythrit-Tetraacrylat (technisch, Fa. Cytec) |

Es wurde eine Mikrokapseldispersion mit einer mittleren Teilchengröße von 3,4 µm und einem Feststoffgehalt von 43,7 % erhalten.

Die Abdampfrate bei 180 °C (1 h) betrug 58,4%.

SVOC aus Gipsplatte: 570 µg/m³

## Patentansprüche

1. Mikrokapseln umfassend einen Kapselkern und eine Kapselwand, wobei die Kapselwand aufgebaut ist aus
| | |
|---|---|
| 50 bis 90 Gew.-% | eines oder mehrerer C₁-C₂₄-Alkylester der Acryl- und/oder Methacrylsäure (Monomere I), |
| 10 bis 50 Gew.-% | eines oder mehrerer Polyvinylmonomere (Monomere II), sowie |
| 0 bis 30 Gew.-% | eines oder mehrerer einfach ungesättigter, nicht ionisierbarer Monomere (Monomer III), die von den Monomeren I ver-schieden sind, |
in einpolymerisierter Form, jeweils bezogen auf das Gesamtgewicht der Monomere.

2. Mikrokapseln nach Anspruch 1, **dadurch gekennzeichnet, dass** die Mikrokapseln eine mittleren Teilchengröße von 1,5 bis 15 µm haben und 90 % der Teilchen eine Teilchengröße von weniger als der doppelten mittleren Teilchengröße haben.

3. Mikrokapseln nach Anspruch 1 oder 2, **dadurch gekennzeichnet, dass** das Polyvinylmonomer ausgewählt wird aus der Gruppe bestehend aus Trimethylolpropantriacrylat und -methacrylat, Pentaerythrittriallylether, Pentaerythrittetraallylether, Pentaerythrittriacrylat und Pentaerythrittetraacrylat sowie ihren technischen Mischungen.

4. Mikrokapseln nach einem der Ansprüche 1 bis 3, erhältlich, indem man eine Öl-in-Wasser-Emulsion, umfassend die Monomere, Radikalstarter, anorganisches Schutzkolloid und die einzukapselnde lipophile Substanz, herstellt und die Polymerisation auslöst.

5. Mikrokapseln nach einem der Ansprüche 1 bis 4, erhältlich, indem man eine Öl-in-Wasser-Emulsion, umfassend die Monomere, Radikalstarter, anorganisches Schutzkolloid und die einzukapselnde lipophile Substanz, herstellt und die Polymerisation auslöst, wobei der Anteil an anorganischem Schutzkolloid 0,5-15 Gew.-% bezogen auf die Wasserphase der Emulsion beträgt.

6. Mikrokapseln nach einem der Ansprüche 1 bis 5, erhältlich, indem man im Anschluss an die Kapselbildung eine Nachpolymerisation mit Salzen der Peroxodischwefelsäure als Radikalstarter auslöst.

7. Mikrokapseln nach einem der Ansprüche 1 bis 5, **dadurch gekennzeichnet, dass** der Kapselkern eine lipophile Substanz mit einem fest/flüssig Phasenübergang im Temperaturbereich von -20 bis 120 °C ist.

8. Mikrokapseln nach einem der Ansprüche 1 bis 7 in Form einer wässrigen Dispersion.

9. Verfahren zur Herstellung von Mikrokapseln gemäß den Ansprüche 1 bis 11, **dadurch gekennzeichnet, dass** man aus Monomeren, Radikalstarter, Schutzkolloid und der einzukapselnden lipophilen Substanz eine Öl-in-Wasser-Emulsion herstellt, und die Polymerisation der Monomeren durch Erwärmung auslöst und gegebenenfalls durch weitere Temperaturerhöhung steuert.

10. Verfahren zur Herstellung von Mikrokapseln nach Anspruch 9, **dadurch gekennzeichnet, dass** man ein anorganisches Schutzkolloid wählt.

11. Verfahren zur Herstellung von Mikrokapseln nach Anspruch 9, **dadurch gekennzeichnet, dass** man im Anschluss an die Kapselbildung eine Nachpolymerisation mit Salzen der Peroxodischwefelsäure als Radikalstarter auslöst.

12. Verwendung der Mikrokapseln gemäß den Ansprüchen 1 bis 8 in Bindebaustoffen.

13. Verwendung der Mikrokapseln gemäß den Ansprüchen 1 bis 8 zur Modifizierung von Gipsbauplatten.

14. Verwendung der Mikrokapseldispersion gemäß den Ansprüchen 1 bis 8 in Wär-meträgerflüssigkeiten.

## Claims

1. A microcapsule comprising a capsule core and a capsule wall, where the capsule wall is constructed from
| | |
|---|---|
| 50 to 90% by weight | of one or more C₁-C₂₄-alkyl esters of acrylic acid and/or methacrylic acid (monomers I), |
| 10 to 50% by weight | of one or more polyvinyl monomers (monomers II), and |
| 0 to 30% by weight | of one or more monounsaturated, nonionizable monomers (monomer III), which are different from the monomers I, |
| in copolymerized form, | in each case based on the total weight of the monomers. |

2. The microcapsule according to claim 1, wherein the microcapsule has an average particle size of from 1.5 to 15 µm and 90% of the particles have a particle size of less than twice the average particle size.

3. The microcapsule according to claim 1 or 2, wherein the polyvinyl monomer is selected from the group consisting of trimethylolpropane triacrylate and trimethacrylate, pentaerythritol triallyl ether, pentaerythritol tetraallyl ether, pentaerythritol triacrylate and pentaerythritol tetraacrylate, and their technical-grade mixtures.

4. The microcapsule according to any one of claims 1 to 3, obtainable by preparing an oil-in-water emulsion comprising the monomers, free-radical initiator, inorganic protective colloid and the lipophilic substance to be encapsulated, and triggering the polymerization.

5. The microcapsule according to any one of claims 1 to 4, obtainable by preparing an oil-in-water emulsion comprising the monomers, free-radical initiator, inorganic protective colloid and the lipophilic substance to be encapsulated, and triggering the polymerization, where the fraction of inorganic protective colloid is 0.5-15% by weight, based on the water phase of the emulsion.

6. The microcapsule according to any one of claims 1 to 5, obtainable by, after the capsule formation, triggering an afterpolymerization with salts of peroxodisulfuric acid as free-radical initiator.

7. The microcapsule according to any one of claims 1 to 5, wherein the capsule core is a lipophilic substance with a solid/liquid phase transition in the temperature range from -20 to 120°C.

8. The microcapsule according to any one of claims 1 to 7 in the form of an aqueous dispersion.

9. A process for the preparation of microcapsules according to claims 1 to 11, which comprises preparing an oil-in-water emulsion from monomers, free-radical initiator, protective colloid and the lipophilic substance to be encapsulated, and triggering the polymerization of the monomers by heating and, optionally, controlling the polymerization by further increasing the temperature.

10. The process for the preparation of microcapsules according to claim 9,
wherein an inorganic protective colloid is selected.

11. The process for the preparation of microcapsules according to claim 9, wherein, after the capsule formation, an afterpolymerization is triggered with salts of peroxodisulfuric acid as free-radical initiator.

12. The use of the microcapsules according to claims 1 to 8 in binding construction materials.

13. The use of the microcapsules according to claims 1 to 8 for modifying gypsum construction boards.

14. The use of the microcapsule dispersion according to claims 1 to 8 in heat transfer liquids.

## Revendications

1. Microcapsules comprenant un noyau de capsule et une paroi de capsule, la paroi de capsule étant formée de
50 à 90 % en poids d'un ou de plusieurs esters C₁-C₂₄-alkyliques de l'acide acrylique et/ou méthacrylique (monomères I),
10 à 50% en poids d'un ou de plusieurs monomères de type polyvinyle (monomères II), ainsi que
0 à 30% en poids d'un ou de plusieurs monomères monoinsaturés, non ionisables (monomère III) qui sont différents des monomères I,
sous forme copolymérisée, dans chaque cas par rapport au poids total des monomères.

2. Microcapsules selon la revendication 1, **caractérisées en ce que** les microcapsules présentent une grosseur moyenne des particules de 1,5 à 15 µm et 90% des particules présentent une grosseur de particule inférieure au double de la grosseur de particule moyenne.

3. Microcapsules selon la revendication 1 ou 2, **caractérisées en ce que** le monomère de type polyvinyle est choisi dans le groupe constitué par le triacrylate et le triméthacrylate de triméthylolpropane, le pentaérythritoltriallyléther, le pentaérythritoltétraallyléther, le triacrylate de pentaérythritol et le tétraacrylate de pentaérythritol ainsi que leurs mélanges techniques.

4. Microcapsules selon l'une quelconque des revendications 1 à 3, pouvant être obtenues en ce qu'on prépare une émulsion huile-dans-eau, comprenant les monomères, un initiateur radicalaire, un colloïde de protection inorganique et une substance lipophile à encapsuler et on déclenche la polymérisation.

5. Microcapsules selon l'une quelconque des revendications 1 à 4, pouvant être obtenues en ce qu'on prépare une émulsion huile-dans-eau, comprenant les monomères, un initiateur radicalaire, un colloïde de protection inorganique et une substance lipophile à encapsuler et on déclenche la polymérisation, la proportion de colloïde de protection inorganique valant 0,5-15% en poids, par rapport à la phase aqueuse de l'émulsion.

6. Microcapsules selon l'une quelconque des revendications 1 à 5, pouvant être obtenues en ce qu'on déclenche, après la formation de la capsule, une post-polymérisation avec des sels de l'acide peroxodisulfurique comme initiateur radicalaire.

7. Microcapsules selon l'une quelconque des revendications 1 à 5, **caractérisées en ce que** le noyau de la capsule est une substance lipophile présentant une transition de phases solide/liquide dans la plage de température de -20 à 120°C.

8. Microcapsules selon l'une quelconque des revendications 1 à 7, sous forme d'une dispersion aqueuse.

9. Procédé pour la préparation de microcapsules selon les revendications 1 à 11, **caractérisé en ce qu'**on prépare une émulsion huile-dans-eau à partir des monomères, de l'initiateur radicalaire, du colloïde de protection et de la substance lipophile à encapsuler et on déclenche la polymérisation des monomères en chauffant et on la commande le cas échéant par une nouvelle augmentation de la température.

10. Procédé pour la préparation de microcapsules selon la revendication 9, **caractérisé en ce qu'**on choisit un colloïde de protection inorganique.

11. Procédé pour la préparation de microcapsules selon la revendication 9, **caractérisé en ce qu'**on déclenche, après la formation de la capsule, une post-polymérisation avec des sels de l'acide peroxodisulfurique comme initiateur radicalaire.

12. Utilisation des microcapsules selon les revendications 1 à 8 dans les matériaux de construction liants.

13. Utilisation des microcapsules selon les revendications 1 à 8 pour la modification de plaques de construction en plâtre.

14. Utilisation de la dispersion de microcapsules selon les revendications 1 à 8 dans les liquides caloporteurs.
